# EUROPÄISCHE PATENTANMELDUNG

(11) **EP 1 147 813 A2**
(43) Veröffentlichungstag der Anmeldung: **24.10.2001**
(21) Anmeldenummer: 01105834.4
(22) Anmeldetag: 09.03.2001
(51) Int. Cl.: B01J 35/04, C04B 35/04, B01D 53/86

(54) **Keramischer Katalysatorformkörper zur selektiven Zersetzung von N2O und Verfahren zur seiner Herstellung**

(30) Priorität: 13.03.2000 DE 10011738
(71) Anmelder: Porzellanwerk Kloster Veilsdorf GmbH, 98669 Veilsdorf/Werra (DE)
(72) Erfinder: Burckhardt, Wolfgang Dr., 07629 Hermsdorf (DE); Voigt, Manfred, 98667 Giessübel (DE)
(74) Vertreter: Däsch, Götz, Dipl.-Ing. Patentanwalt

(57) **Zusammenfassung**

2.1. Der Erfindung liegt die Aufgabe zugrunde, einen keramischen Katalysator zur selektiven Zersetzung von N₂O in einem Gemisch nitroser Gase zu schaffen, wobei das Ausgangsmaterial gut verarbeitbar sein soll und ausreichende Werte sowohl der Rohbruchfestigkeit als auch der Festigkeit im gebrannten Zustand erreicht werden.
2.2. Diese Aufgabe wird bei keramischen Katalysatorformkörpern zur selektiven Zersetzung von N₂O (Lachgas) in den Reaktionsgasen bei der Salpetersäureherstellung unmittelbar hinter den Edelmetallnetzen zur Ammoniakoxidation bei einer Arbeitstemperatur über 800 °C, wobei das keramische Trägermaterial überwiegend aus Magnesiumoxid besteht, dadurch gelöst, daß das keramische Trägermaterial 5 Masse-% bis 30 Masse-%, vorzugsweise 10 Masse-% bis 20 Masse-% eines verfestigenden keramischen Binders enthält.
2.3. Die erfindungsgemäßen Erzeugnisse sind insbesondere in Verbindung mit Katalysatoren zur selektiven Zersetzung von N₂O (Lachgas) in den Reaktionsgasen bei der Salpetersäureherstellung anwendbar.

## Beschreibung

Die Erfindung betrifft einen prismatischen keramischen Katalysatorformkörper oder Wabenkörper einschließlich von als Schüttung verwendeten Klein-Wabenkörpern im Längen- und Durchmesserbereich bis etwa 20 mm (sogenannte "Miniliths") zur selektiven Zersetzung von N₂O (Lachgas) in den Reaktionsgasen bei der Salpetersäureherstellung unmittelbar hinter den Edelmetallnetzen zur Ammoniakoxidation bei einer Arbeitstemperatur über 800 °C, wobei das keramische Trägermaterial überwiegend aus Magnesiumoxid besteht.

N₂O (Lachgas) wird bei den verschiedensten Prozessen freigesetzt, wie beispielsweise in Wirbelschichtfeuerungsanlagen sowie bei Prozessen der chemischen Synthese von Nylon, Adipin- und Salpetersäure. Auf Grund seiner Reaktionsträgheit gelangt es unzersetzt bis in die Stratosphäre, wo es langfristig zur Schädigung der schützenden Ozonschicht der Erde beiträgt. Daher wurden auf der Weltumweltkonferenz in Kyoto im Jahre 1997 erstmals Auflagen zur globalen Emissionsverminderung dieses Gases festgeschrieben. Dies erfordert den Einsatz geeigneter Katalysatoren zur Behandlung der Abgasströme.

Als potentielle Katalysatorwerkstoffe kommen neben verschiedenen Edelmetallen keramische Werkstoffe, bspw. modifizierte Zeolithe und Mischoxide mit Perowskitstruktur in Frage. Wegen ihres Preisvorteils gegenüber den Edelmetallen und ihrer besseren Temperaturbeständigkeit werden Perowskitverbindungen als günstig angesehen. In Catal. Lett. (1995), 34 (3, 4) pp. 373-382 wird von N. Gunasekaran u. a. die katalytische Zersetzung von Lachgas über Mischoxiden mit Perowskit- bzw. perowskitähnlicher Struktur beschrieben, wobei als Katalysatorwerkstoffe La_{0,8}Sr_{0,2}MO_{3-δ} (M = Cr, Fe, Mn, Co, Y) und La_{1,8}Sr_{0,2}CuO_{4-δ} als günstig angesehen werden.

Als Zielrichtung wurde bisher aus energetischen Gründen vor allem an Katalysatoren gearbeitet, die im Bereich von 250 °C bis 450 °C eine möglichst vollständige Umsetzung des N₂O ermöglichen. Dabei hat sich ein Gemisch eines Anionendefektperowskits der Zusammensetzung La₁₋ₓCuₓCoO_{3-δ}, mit x = 0 ... 0,5 und eines Spinells der Zusammensetzung Co₃O₄ im Massenverhältnis bis 1:1 als besonders vorteilhaft erwiesen (DE 197 00 490 A1).

Die bisher genannten Katalysatoren versagen jedoch bei höheren Temperaturen (800 °C ... 1200 °C), wie sie insbesondere zur Minderung des Gehaltes an N₂O in den Prozeßgasen bei der Salpetersäureherstellung (900 °C) benötigt werden. Infolge der oben erwähnten Festlegungen von Kyoto liegt gerade für den letztgenannten Prozeß ein steigender Bedarf an Katalysatoren für die eingangs erwähnte Reaktion vor.

Die genannten Katalysatoren zur Zersetzung von N₂O erleiden bei Temperaturen oberhalb 700 °C eine irreversible Desaktivierung, welche durch Sintervorgänge (Edelmetallkatalysatoren), durch mangelnde thermische Stabilität der Gerüststruktur (Zeolithe) oder durch irreversible Reaktionen zwischen den Übergangsmetalloxiden der aktiven Komponenten mit Trägermaterialien, wie solchen mit hohem Gehalt an Al₂O₃ verursacht wird.

Eine Besonderheit des Einsatzes bei der Herstellung von Salpetersäure liegt ferner in der erforderlichen Selektivität in bezug auf andere Oxide des Stickstoffes, von denen eins ja das Zielprodukt der Synthese ist. Eine solche Selektivität ist bei anderen Abgasbehandlungsvorgängen nicht erforderlich oder sogar nicht erwünscht.

Dieses Problem wurde durch einen Katalysator prinzipiell gelöst, welcher aus einem porösen keramischen Trägermaterial und einer aktiven Phase besteht, wobei das Trägermaterial zu mindestens 95 Masse% aus Erdalkaliverbindungen, wie beispielsweise Magnesium- und Kalziumoxid, besteht. Die aktive Phase besteht vorteilhafterweise aus einem oder mehreren Oxiden und/oder einem oder mehreren Mischoxiden der Elemente Cr, Mn, Fe, Co, Ni, Cu, Zn, Ga, In, Ag, Ti, Y, Zr, La, Ca, Sr, und Ba, vorzugsweise La, Cr, Mn, Fe, Co, Ni, und Cu und insbesondere Co (DE 198 41 740 A1). Dieser Katalysator arbeitet im genannten Temperaturbereich bezüglich der Umsetzungscharakteristik sowie wegen der guten Beständigkeit gegen Desaktivierung zur vollsten Zufriedenheit. Jedoch bereiten die ungenügende Bildsamkeit und Rohbruchfestigkeit der fast ausschließlich aus den genannten Erdalkalioxiden bestehenden Massen zur Herstellung des Trägermaterials bei der Herstellung von Trägerkörpern mit erwünschter hoher spezifischer Oberfläche, d.h. mit hoher Porosität und/oder mit besonders dünnwandig ausgeführten Formkörpern, Schwierigkeiten. Auch haben insbesondere die zuletzt erwähnten Formkörper mit hoher spezifischer Oberfläche im gebrannten Fertigzustand eine unbefriedigende Bruchfestigkeit.

Der Erfindung liegt daher die Aufgabe zugrunde, einen keramischen Katalysator zur selektiven Zersetzung von N₂O in einem Gemisch nitroser Gase zu schaffen, der im Temperaturbereich von 700 °C bis mindestens 1000 °C ohne Beeinträchtigung seiner Katalysatoraktivität einsetzbar sein soll, wobei das Ausgangsmaterial gut zu feinen Strukturen mit hoher spezifischer Oberfläche verarbeitbar sein soll und ausreichende Werte sowohl der Rohbruchfestigkeit als auch der Festigkeit im gebrannten Zustand erreicht werden.

Diese Aufgabe wird durch die in den Patentansprüchen beschriebene Erfindung gelöst.

Der erfindungsgemäß gegenüber dem zuletzt genannten Stand der Technik erhöhte Anteil an verfestigendem keramischen Binder führt zu einer erhöhten Festigkeit im rohen wie im gebrannten Zustand und zu einer Optimierung der Porenstruktur der Trägermaterials, so daß auch ein beträchtlicher Anteil an innerer Oberfläche katalytisch wirksam wird.

Der erhöhte Binderanteil führt auch und vor allem zu einer Erweiterung der Formgebungsmöglichkeiten:
a) Nach Plastifizierung mit an sich bekannten temporären Plastifikatoren ist eine Extrusion von prismatischen Katalysatorformkörpern oder von Wabenkörpern mit hoher spezifischer Oberfläche (mit dünnen Wänden) möglich, wodurch in erwünschter Weise der Druckverlust durchströmender Prozeßgase beim Einsatz des Katalysators minimiert wird.
b) Nach der Sprühtrocknung unter Zusatz üblicher Preßhilfsmittel können durch Trockenpressen prismatische Katalysatorformkörper oder Miniatur-Wabenkörper (sogenannte "Miniliths") hochrationell hergestellt werden.

Die Erfindung wird nachstehend an mehreren Ausführungsbeispielen näher erläutert:

Generell ist durch die Anwendung der Erfindung die Herstellung großer Wabenkörper mit einer Kanaldichte von 50 bis 400 csi (Kanäle pro Quadratzoll) problemlos möglich.

Die Herstellung der Katalysatorformkörper oder "Miniliths" ist in gleicher Weise möglich, wobei es sich wiederum zur Erzielung möglichst geringer Strömungwiderstände einer Schüttung solcher Körper entweder um kleine Wabenkörper mit Kanaldichten an der oberen Grenze des oben genannten Bereiches oder um prismatische Körper handelt, die eine regelmäßige Anordnung axial durchgehender Bohrungen aufweisen. Erfahrungsgemäß haben solche Körper im genannten Anwendungsgebiet einen optimalen Strömungswiderstand, wenn Zylinderdurchmesser und -länge etwa gleich sind und im Bereich von 3 mm bis 20 mm, vorzugsweise von 5 mm bis 10 mm liegen.

Wie es dem Fachmann auf dem Gebiet der Keramik allgemein bekannt ist, wurden Rohstoffversätze derart vorbereitet, daß der daraus geformte und gebrannte Körper folgende erfindungsgemäße Zusammensetzung hat:

| Beispiel 1: | | |
|---|---|---|
| Tägermaterial | Magnesiumoxid (Korngröße ≈ 6 µm) | 70 Ma.% |
| | Alumiumoxid (Korngröße < 30 nm) | 30 Ma.% |
| | | |
| aktive Phase | Co₃O₄ | 10 Ma.% |
| | (letztere Angabe bezogen auf den kompletten Katalysatorformkörper) | |

| Beispiel 2: | | |
|---|---|---|
| Tägermaterial | Magnesiumoxid | 90 Ma.% |
| | Alumiumoxid | 10 Ma.% |
| | | |
| aktive Phase | LaCoO₃ | 5 Ma.% |
| | (letztere Angabe bezogen auf den kompletten Katalysatorformkörper) | |

| Beispiel 3: | | |
|---|---|---|
| Tägermaterial | Magnesiumoxid | 95 Ma.% |
| | Alumiumoxid | 5 Ma.% |
| | | |
| aktive Phase | La-Sr-Mn-Co-Perowskit | 1 Ma.% |
| | (letztere Angabe bezogen auf den kompletten Katalysatorformkörper) | |

Die auf diese Weise zubereiteten Versätze werden mittels polymerer Additive (beispielsweise Wachse, Cellulose, Glycerin usw.) zur Weiterverarbeitung durch Extruduieren mit entsprechend geformten Ziehmundstücken zu Pellets, Miniliths oder Wabenkörpern plastifziert.

Als Alternative können die o.g. Versätze auch wäßrig dispergiert und im Sprühtrockner zu einem rieselfähigen Preßgranulat mit einem mittleren Korndurchmesser von 150 µm bis 600 µm verarbeitet werden. Die Formgebung erfolgt dann in bekannter Weise unter Zusatz von Preßhilfsmitteln (beispielsweise Metallstearaten) durch Trockenpressen.

## Patentansprüche

1. Keramischer Katalysatorformkörper, vorzugsweise Wabenkörper einschließlich von als Schüttung verwendeten Klein-Wabenkörpern im Längen- und Durchmesserbereich bis etwa 20 mm (sogenannte "Miniliths") zur selektiven Zersetzung von N₂O (Lachgas) in den Reaktionsgasen bei der Salpetersäureherstellung unmittelbar hinter den Edelmetallnetzen zur Ammoniakoxidation bei einer Arbeitstemperatur über 800 °C, wobei das keramische Trägermaterial überwiegend aus Magnesiumoxid besteht, **dadurch gekennzeichnet, daß** das keramische Trägermaterial 5 Masse-% bis 30 Masse-%, vorzugsweise 10 Masse-% bis 20 Masse-% eines verfestigenden keramischen Binders enthält.

2. Katalysatorformkörper nach bisherigen Anspruch 1, **dadurch gekennzeichnet, daß** er durch einen aluminiumoxidhaltigen Spinell verfestigt ist.

3. Katalysatorformkörper nach einem der bisherigen Ansprüche, **dadurch gekennzeichnet, daß** er aus einem porösen keramischen Trägermaterial und einer katalytisch aktiven Phase besteht.

4. Katalysatorformkörper nach Anspruch 4, **dadurch gekennzeichnet, daß** die aktive Phase aus einem oder mehreren Oxiden und/oder einem oder mehreren Mischoxiden der Elemente Cr, Mn, Fe, Co, Ni, Cu, Zn, Ga, In, Ag, Ti, Y, Zr, La, Ca, Sr, und Ba, bevorzugt La, Cr, Mn, Fe, Co, Ni, und Cu, besonders bevorzugt Co besteht.

5. Katalysatorformkörper nach Anspruch 3 oder 4, **dadurch gekennzeichnet, daß** der Masseanteil der aktiven Phase 0,1 Masse-% bis 50 Masse-%, vorzugsweise 1 Masse-% bis 10 Masse-% beträgt.

6. Katalysatorformkörper nach einem der bisherigen Ansprüche, **dadurch gekennzeichnet, daß** die aktive Phase in einem porösen Trägermaterial dispergiert ist.

7. Verfahren zur Herstellung von Katalysatorformkörpern nach den bisherigen Ansprüche, **dadurch gekennzeichnet, daß** als keramische Binder hochdisperse Aluminiumoxidhydrate und/oder Aluminiumoxid-Sole zugesetzt werden, die über die Spinellbildung zu einer Verfestigung der keramischen Matrix des Trägermaterials führen.

8. Verfahren zur Herstellung von Katalysatorformkörpern nach Anspruch 7, **dadurch gekennzeichnet, daß** sie aus einer plastischen Masse, die eine Zusammensetzung nach einem der Ansprüche 1 bis 7 ergibt, zu Formkörpern hoher geometrischer Oberfläche, vorzugsweise zu Wabenkörpern oder zu sogenannten Miniliths, extrudiert werden.

9. Verfahren zur Herstellung von Katalysatorformkörpern nach Anspruch 7, **dadurch gekennzeichnet, daß** sie durch Pressen aus einem Preßgranulat, das eine Zusammensetzung nach einem der Ansprüche 1 bis 7 ergibt, zu Formkörpern hoher geometrischer Oberfläche, vorzugsweise zu sogenannten Miniliths, geformt werden.
